# FASCICULE DE BREVET EUROPEEN

(11) **EP 1 870 283 B1**
(45) Date de publication et mention de la délivrance du brevet: **05.01.2011**
(21) Numéro de dépôt: 07110349.3
(22) Date de dépôt: 15.06.2007
(51) Int. Cl.: B60Q 1/08

(54) **Ensemble projecteur à trois fonctions pour véhicule automobile**
Scheinwerfereinheit mit drei Funktionen für Kraftfahrzeuge
Triple-function headlight unit for vehicle

(30) Priorité: 19.06.2006 FR 0605431
(43) Date de publication de la demande: 26.12.2007
(73) Titulaire: VALEO VISION, 93012 Bobigny (FR)
(72) Inventeur: Reiss, Benoît, 95600 EAUBONNE (FR); Merenaud, Jean-Luc, 93190 LIVRY GARGAN (FR); Tronquet, Guillaume, 93100 MONTREUIL SOUS BOIS (FR)

(56) Documents cités:
- EP-A- 1 147 942
- EP-A- 1 762 431
- EP-A2- 1 093 965
- DE-A1-102004 051 485
- FR-A1- 2 793 002
- GB-A- 2 395 548

## Description

La présente invention concerne d'une façon générale l'éclairage automobile.

Elle concerne en particulier des perfectionnements à ensembles projecteurs produisant des faisceaux pour éclairage de croisement, des faisceaux pour éclairage de route et des faisceaux spécifiques pour circulation autoroutière, tels qu'ils sont émis par les ensembles projecteurs actuels. Dans la présente description, l'expression « ensemble projecteur » désigne un agencement ou une installation susceptible d'émettre plusieurs des faisceaux qui viennent d'être évoqués, que ces agencements ou installations comprennent un ou plusieurs modules engendrant ces faisceaux, un véhicule automobile comportant un ensemble projecteur droit et un ensemble projecteur gauche.

Un faisceau de croisement traditionnel, pour un sens de circulation à droite, est relativement étalé en largeur et il est délimité par une coupure supérieure généralement horizontale ou encore en "V" asymétrique. Dans un tel faisceau, la zone de concentration maximale de lumière est en général décalée vers la droite par rapport à l'axe de la voie afin d'éclairer convenablement le bas-côté de la route.

Alors qu'un tel faisceau de croisement donne satisfaction pour une circulation en ville, ou encore sur route à vitesse modérée, il s'avère toutefois insuffisant au conducteur en cas de circulation autoroutière à vitesse relativement élevée. Ainsi la zone de concentration centrale d'un tel faisceau de croisement présente en général une intensité lumineuse modérée, et se situe trop bas au-dessous de l'horizon.

Dans cette condition de circulation sur autoroute, il est connu de compléter le faisceau de croisement par un faisceau additionnel relativement concentré, pour renforcer ainsi la portée du faisceau dans l'axe de la voie, pour procurer au conducteur un certain confort visuel sans toutefois risquer d'éblouir les conducteurs des véhicules roulant en sens inverse, qui sont fortement décalés vers la gauche en raison de l'existence d'un séparateur central sur autoroute.

D'autre part, pour une circulation sur route en l'absence de véhicules circulant en sens inverse ou précédant le véhicule considéré, on utilise des faisceaux relativement concentrés, de manière à fournir un éclairage de la scène de route à environ 200 mètres en avant du véhicule.

Il est ainsi nécessaire de disposer de trois modules distincts dédiés chacun à la formation d'un des faisceaux décrits ci-dessus, d'où un encombrement relativement important de chaque ensemble projecteur droit et gauche.

Dans la présente description, on entend par « module » un système optique comprenant au moins une source lumineuse éventuellement disposée dans un réflecteur, et éventuellement associée à un ou plusieurs éléments dioptriques du type lentille, par exemple une ou plusieurs diodes électroluminescentes regroupées, ou une lampe halogène ou xénon dans un réflecteur, et qui soit de préférence autonome, c'est-à-dire qui soit apte à être allumé ou éteint séparément d'autres modules du projecteur.

De manière à réduire le nombre de modules nécessaires, on fait appel à des modules dits « bifonction », c'est-à-dire aptes à engendrer sélectivement deux faisceaux différents, tel que connu de EP 1 093 965.

Un tel module bifonction est par exemple obtenu à l'aide d'un système à réflexion, constitué d'un lampe à deux filaments, dont l'un est destiné à engendrer un faisceau remplissant une première fonction, par exemple la fonction code et l'autre à engendrer un faisceau remplissant une deuxième fonction différente de la première fonction, par exemple la fonction route, coopérant avec un réflecteur du type « à surfaces complexes ». Un autre type de module bifonction est par exemple obtenu à l'aide de deux réflecteurs solidaires l'un de l'autre, chacun étant associé à une source lumineuse unique, chaque réflecteur étant calculé pour engendrer un faisceau remplissant une fonction prédéterminée.

De plus en plus fréquemment, un module bifonction est obtenu à l'aide d'un système à projection, constitué d'un projecteur de type elliptique, dans lequel une source lumineuse est placée au premier foyer d'un miroir elliptique, qui forme une tache de concentration lumineuse à son deuxième foyer. Une lentille convergente ayant son foyer objet coïncidant avec le deuxième foyer du miroir elliptique projette cette tache de concentration lumineuse sur la route en avant du véhicule.

De manière classique, un cache est disposé au foyer de la lentille convergente pour déterminer la coupure du faisceau de croisement. Le faisceau d'éclairage de route est alors obtenu en déplaçant le cache en dehors de cette position focale, tous les rayons réfléchis par le miroir elliptique traversant alors la lentille convergente pour former le faisceau d'éclairage de route, dépourvu de coupure supérieure. Ces projecteurs elliptiques sont donc capables de fournir un faisceau de croisement et un faisceau de route par simple basculement du cache.

Avec de tels modules bifonction, le faisceau d'éclairage de route est ainsi obtenu en superposant au faisceau de croisement un faisceau lumineux comportant des rayons situés au dessus de la coupure du faisceau de croisement.

Par ailleurs, les trois faisceaux que l'on vient de décrire ont des caractéristiques réglementaires très précises, aussi bien en termes de photométries qu'en termes de réglementation. Ainsi, de manière générale, si un faisceau de croisement est relevé en site dans l'intention de former un faisceau de route, un tel faisceau relevé peut satisfaire stricto sensu à la réglementation en vigueur, mais sa concentration centrale reste insuffisante de même que sa répartition géométrique est tout à fait inadaptée. De la même façon, une circulation sur autoroute avec les projecteurs de route va éblouir à coup sûr les conducteurs des véhicules roulant en sens inverse, ou encore les conducteurs des véhicules précédant le véhicule considéré.

De plus, le faisceau de route engendré par un module bifonction associé à une source halogène, constitué de la superposition d'un faisceau de croisement à coupure et d'un faisceau situé au dessus de cette coupure possède un maximum d'intensité sur un écran à 25 mètres d'environ 35 Lux dans l'axe du véhicule, alors que la réglementation prévoit que ce maximum soit supérieur ou égal à 50 lux environ. Il est donc utile, sinon nécessaire de renforcer le faisceau de route engendré par un module bifonction par un faisceau additionnel, engendré par un module additionnel dédié à cette fonction.

Ainsi, même en utilisant des modules bifonction, il est encore nécessaire, pour obtenir les trois faisceaux réglementaires de croisement et de route, et le faisceau complémentaire pour circulation sur autoroute, de disposer de trois modules :
soit :- un module émettant le faisceau de croisement,
   - un module émettant le faisceau de route, et
   - un module émettant le faisceau pour circulation sur autoroute.
soit : - un module bifonction émettant les faisceaux de croisement et de route,
   - un module additionnel pour renforcer le faisceau de route, et
   - un module émettant le faisceau pour circulation sur autoroute.

Ainsi, quelle que soit la configuration choisie, chaque ensemble projecteur, comportant trois modules distincts, présente donc un encombrement qui rend difficile son implantation sur un véhicule, aussi bien en termes de dimensions que d'esthétique, une complexité qui nuit à sa fiabilité, et un coût relativement important.

La présente invention se place dans ce contexte et a pour but de proposer un ensemble projecteur qui soit capable d'émettre sélectivement trois faisceaux, à savoir un faisceau de croisement, un faisceau de route et un faisceau spécifique pour circulation autoroutière, ne nécessitant qu'un nombre restreint de dispositifs d'émission de lumière, de manière à accroître la simplicité de la conception de cet ensemble projecteur, sa fiabilité de fonctionnement, et à en diminuer notablement le coût.

L'invention a ainsi pour objet un ensemble projecteur pour véhicule automobile pour l'émission d'au moins un premier, un deuxième et un troisième faisceaux d'éclairage réglementaires différents, dont l'un au moins remplit une fonction AFS.

Selon l'invention, deux faisceaux d'éclairage différents sont émis au moins partiellement par un dispositif d'émission de lumière bifonction, comme décrit dans les revendications 1 et 3.

Des aspects du projecteur selon l'invention sont les suivants:
- dans la première variante, le dispositif d'émission de lumière bifonction émet sélectivement un faisceau d'éclairage de croisement et un faisceau d'éclairage pour la conduite sur autoroute ;
- dans la deuxième variante, le dispositif d'émission de lumière bifonction émet sélectivement un faisceau d'éclairage de croisement et un faisceau d'éclairage de route ;

Optionnellement,
- l'un au moins des faisceaux d'éclairage différents remplit la fonction AFS d'éclairage de virage ;
- le dispositif d'émission de lumière bifonction est monté de façon mobile autour d'un axe vertical, sous l'effet d'un actionneur V, pour remplir la fonction AFS d'éclairage de virage ;
- le dispositif d'émission de lumière bifonction est mobile en rotation autour d'un axe horizontal pour effectuer une correction d'assiette des faisceaux lumineux émis.

D'autres caractéristiques, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels:
- la Figure 1 est une vue schématique en perspective d'une route à l'avant d'un véhicule, avec la représentation schématique d'un faisceau de croisement,
- la Figure 2 est une vue schématique en perspective d'une route à l'avant d'un véhicule, avec la représentation schématique d'un faisceau de route,
- la Figure 3 est une vue schématique en perspective d'une route à l'avant d'un véhicule, avec la représentation schématique d'un faisceau de croisement, et d'un faisceau additionnel apte à venir compléter ce faisceau de croisement pour une conduite sur autoroute,
- la Figure 4 est une vue schématique en perspective d'une route à l'avant d'un véhicule, avec la représentation schématique d'un faisceau de route conformément à la présente invention,
- la Figure 5 est une vue schématique en perspective d'une route à l'avant d'un véhicule, avec la représentation schématique d'un faisceau de route conformément à un deuxième mode de réalisation de la présente invention, et
- le Figure 6 est une représentation schématique d'en ensemble projecteur selon la présente invention.

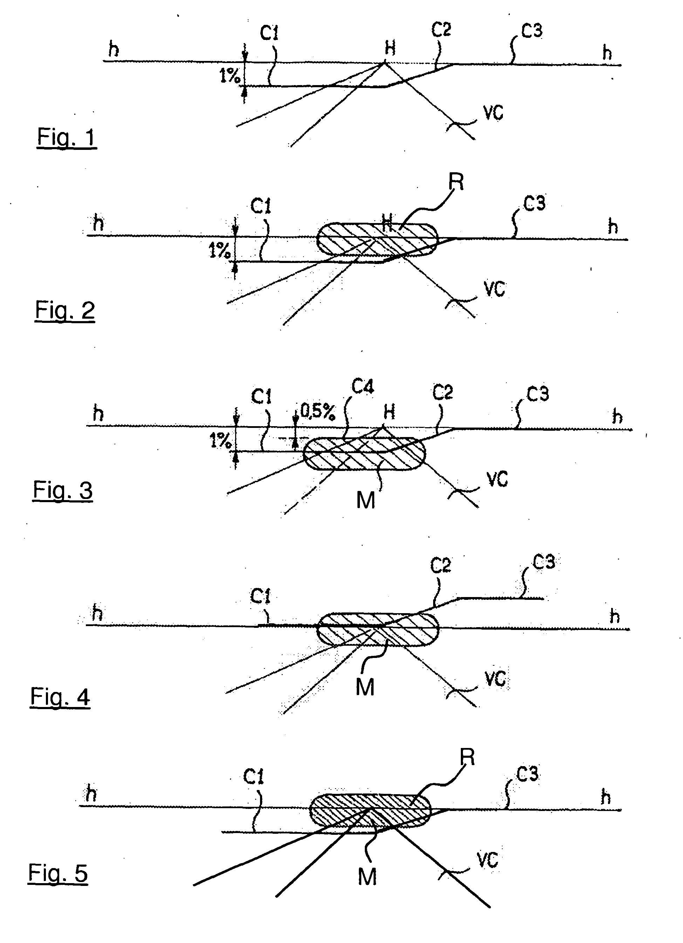

En référence tout d'abord à la figure 1, la voie de circulation d'un véhicule est indiquée par VC, le point H désignant le niveau de l'horizon dans l'axe de la route.

On a représenté sur cette Figure 1 un faisceau de croisement traditionnel, pour un sens de circulation à droite, qui est relativement étalé en largeur et qui est délimité par une coupure supérieure généralement horizontale ou encore en "V" asymétrique, qui peut comprendre par exemple un premier segment de coupure C1 situé à gauche de l'axe de la voie, et qui s'étend horizontalement à environ 1% au-dessous de l'horizon, un deuxième segment C2 orienté en oblique, par exemple à environ 15° vers le haut à partir de l'extrémité droite du segment C1, et un troisième segment C3 s'étendant, à partir de l'extrémité droite du segment C2, horizontalement au niveau de l'horizon. Dans un tel faisceau, la zone de concentration maximale de lumière est en général décalée vers la droite par rapport à l'axe de la voie, et typiquement située au-dessous du segment C2, ceci afin d'éclairer convenablement le bas-côté de la route.

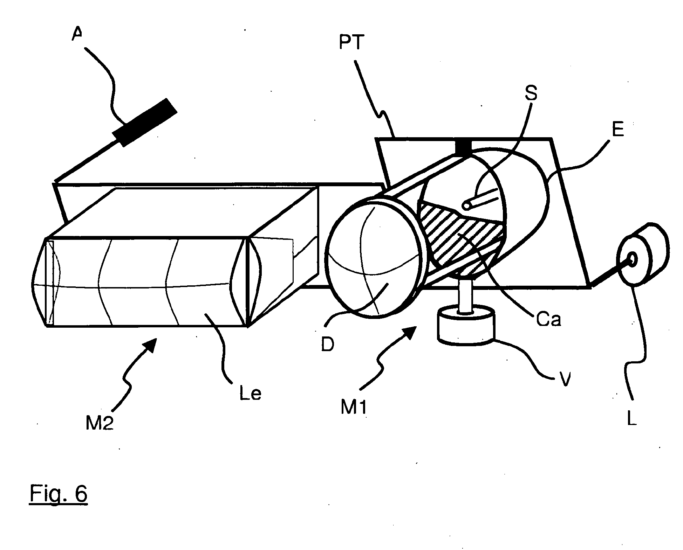

Pour une circulation sur route en l'absence de véhicules circulant en sens inverse ou précédant le véhicule considéré, il est habituel de superposer à ce faisceau de croisement représenté sur la Figure 1 un faisceau de route, ainsi qu'on l'a représenté par la zone R sur la Figure 2. C'est par exemple le cas avec des projecteurs de type elliptique, tel que celui qui est représenté comme constituant le module M1 de la Figure 6.

On sait que dans ces modules elliptiques, une source lumineuse S est placée au premier foyer d'un miroir de type elliptique E, qui forme une tache de concentration lumineuse à son deuxième foyer. Une lentille convergente D ayant son foyer objet coïncidant avec le deuxième foyer du miroir elliptique E projette cette tache de concentration lumineuse sur la route en avant du véhicule.

De manière connue, un cache de coupure Ca disposé au foyer de la lentille D détermine les segments C1, C2 et C3 du faisceau de croisement. Le faisceau d'éclairage de route est alors obtenu en déplaçant le cache Ca en dehors de cette position focale, tous les rayons réfléchis par le miroir elliptique E traversant alors la lentille convergente D pour former le faisceau d'éclairage de route. Dans une telle configuration, le faisceau de route R possède un maximum d'intensité sur un écran à 25 mètres d'environ 100 Lux dans l'axe du véhicule en utilisant une lampe au xénon, c'est-à-dire autour du point H de la Figure 2. Ce faisceau est conforme à la réglementation, toutefois, de nombreux cahiers des charges européens demandent que ce maximum soit supérieur ou égal à 150 lux environ. Comme cela a été exposé plus haut, le maximum désiré est atteint à l'aide d'un projecteur additionnel de route.

Par ailleurs, pour améliorer le confort du conducteur d'un véhicule aussi bien que pour éviter d'éblouir les conducteurs des autres véhicules circulant dans le même sens ou en sens inverse, se développent actuellement de nouvelles fonctions d'éclairage regroupées sous le terme de fonctions AFS, sigle issu de l'expression anglo-saxonne « Adaptive Frontlighting System », signifiant Éclairage Adaptatif. L'une de ces fonctions est appelée « Motorway Light », ou Éclairage pour circulation sur autoroute, et elle est destinée à améliorer le confort visuel du conducteur lors d'une circulation autoroutière à grande vitesse, en complétant le faisceau de croisement classique tel que représenté sur la Figure 1 par un faisceau additionnel relativement concentré, positionné par exemple comme désigné par la zone M sur la Figure 3, comme on l'a décrit dans le document FR 2 793 002.

Les fonctions AFS étant codifiées par un règlement européen, elles seront dans la présente description qualifiées elles aussi de réglementaires.

Un faisceau remplissant la fonction d'éclairage pour conduite sur autoroute a pour but de renforcer la portée du faisceau dans l'axe de la voie, sans toutefois risquer d'éblouir les conducteurs des véhicules roulant en sens inverse, qui sont fortement décalés vers la gauche en raison de l'existence d'un séparateur central sur autoroute. La zone M peut être soit centrée sur l'axe de la voie, soit, comme illustré, légèrement décalée vers la gauche par rapport à l'axe de la voie.

De manière plus précise, le faisceau additionnel pour circulation sur autoroute, symbolisé par la zone M de la Figure 3, est relativement concentré dans l'axe de la voie, et il est délimité par une coupure supérieure C4 décalée par exemple de 0,5% au-dessous de l'horizon.

On comprend donc que si l'on désire obtenir ces trois faisceaux, chaque ensemble projecteur droit et gauche du véhicule doit comporter au moins :
- un module émettant le faisceau de croisement de la Figure 1, et éventuellement le faisceau de route représenté sur la Figure 2, dans le cas de modules dits « bi-fonction »,
- un module route additionnel éventuel pour obtenir la valeur réglementaire maximale dans l'axe du faisceau de route, dans le cas où on utilise un module bifonction croisement/route, et
- un module spécialisé émettant le faisceau additionnel pour circulation sur autoroute, représenté sur la Figure 3.

Chaque ensemble projecteur, comportant ainsi au moins deux, et généralement trois modules distincts, présente ainsi un encombrement et une complexité qui sont difficilement compatibles avec les exigences modernes de fiabilité et de simplicité.

Conformément à la présente invention, il est proposé de n'utiliser qu'un, voire deux modules pour obtenir les faisceaux réglementaires de croisement et de route, et le faisceau complémentaire pour circulation sur autoroute.

Selon un premier mode de réalisation, on peut en effet prévoir que l'ensemble projecteur comprenne un module bifonction qui fournit un faisceau d'éclairage réglementaire de croisement, tel que représenté sur la Figure 1, et un faisceau d'éclairage spécifique pour la conduite sur autoroute, tel que celui qui est représenté par la zone M sur la Figure 3.

Le module bifonction est par exemple constitué d'un module elliptique à cache mobile, selon un principe très proche des caches utilisés pour les modules bi-fonction Code/route tel que celui qui est représenté pour le module M1 de la Figure 6. En l'occurrence, le cache présente deux positions de coupure, une dédiée au faisceau de croisement, une dédiée au faisceau d'éclairage pour conduite sur autoroute.

Dans la position de faisceau de croisement, le cache est tel qu'il a été décrit plus haut, en définissant les segments C1, C2 et C3 de la coupure représentée sur la Figure 1, le cache étant alors classiquement dans une position sensiblement verticale. Pour passer de la position de croisement à la position d'éclairage pour conduite sur autoroute, il suffit de faire effectuer au cache une rotation de 45° autour d'un axe perpendiculaire à l'axe optique du module elliptique, par exemple au moyen d'un moteur à courant continu ou d'un solénoïde. On obtient alors le faisceau de croisement classique complété par le faisceau additionnel relativement concentré représenté par la zone M sur la Figure 3.

L'expérience montre que dans la position d'éclairage pour conduite sur autoroute, le maximum d'éclairement à 25 mètres peut atteindre plus de 120 Lux, soit environ 70 000 Candela avec une source au xénon. Ce maximum d'intensité est situé à 0,86° sous l'horizontale, alors que la ligne de coupure sur le coté gauche du faisceau, c'est-à-dire le segment C1 dans le cas d'un faisceau pour conduite à droite, est situé à 0.23° sous l'horizontale.

On peut alors remarquer que cette valeur du maximum d'intensité du faisceau d'éclairage pour conduite sur autoroute correspond à la valeur minimale de la réglementation pour un faisceau de route de bonne qualité. Par conséquent, uniquement en relevant le faisceau d'éclairage pour conduite sur autoroute de manière à amener son maximum d'intensité en coïncidence avec le point réglementaire du maximum d'intensité d'un faisceau de route, on obtient un faisceau de route répondant à la réglementation en vigueur en Europe. C'est le faisceau qu'on a représenté sur la Figure 4.

Le tableau ci-dessous donne un comparatif du faisceau d'éclairage pour conduite sur autoroute, relevé vers le haut d'un angle de 0.86 - 0.23 = 0.63°, et d'un angle de 0,8°, avec les valeurs minimales réglementaires d'un faisceau de route (les valeurs sont données en Candela) :

| Point de mesure | 0,63° | 0,8° | Minimum Route | Situation |
|---|---|---|---|---|
| Max Scan | 69713.0 | 69 017.3 | 30000 | .25D-.25R |
| H-5.14L TO 5.14R | 11 203.6 | 16 920.1 | 3750 | H-5.14L |
| H-2.57L TO 2.57R | 22096.7 | 31 755.7 | 15.000 | H-2.57L |
| H-V (%MaxSc) | 62 648.0 | 68202.9 | 55770.4 | |

Dans les deux cas de relèvement, 0,63° ou 0,8°, on voit donc que le faisceau d'éclairage pour conduite sur autoroute est parfaitement apte à générer un faisceau réglementaire d'éclairage route.

Un faisceau de route obtenu de la façon qui vient d'être décrite, bien qu'étant totalement conforme à la réglementation en vigueur, peut présenter une épaisseur ou une largeur jugées insuffisantes, pour uniquement des questions de confort visuel du conducteur. Il est possible dans ce cas, d'ajouter un module additionnel, du type de ceux qui sont utilisés pour renforcer le faisceau de route d'un module bifonction croisement/route évoqué plus haut.

Ce module additionnel peut-être réalisé simplement avec un réflecteur de type à surface complexe de faible diamètre, par exemple proche du diamètre du module elliptique bifonction croisement/éclairage pour conduite sur autoroute qu'il vient compléter, et une lampe halogène, par exemple de type H7. Il peut également être défini avec des diodes électroluminescentes blanches, associées soit à de simples réflecteurs, soit à des modules de type à module elliptique et lentille de sortie.

Le conducteur du véhicule équipé du module bifonction qui vient d'être décrit dispose ainsi des faisceaux suivants :
- un faisceau de croisement réglementaire représenté sur la Figure 1, procuré par le module bifonction dont le cache est en position croisement,
- un faisceau d'éclairage pour la conduite sur autoroute, représenté sur la Figure 3, et procuré par le module bifonction dont le cache est en position d'éclairage pour conduite sur autoroute, et
- un faisceau de route réglementaire, représenté sur la Figure 4, procuré par le module bifonction dont le cache est dans la position précédente et qui a simplement été relevé vers le haut d'un angle inférieur à 1 °,
ces trois faisceaux étant obtenus au moyen d'un seul module bifonction croisement/éclairage pour conduite sur autoroute.

Selon un deuxième mode de réalisation de la présente invention, on peut prévoir d'obtenir les mêmes trois faisceaux (croisement - route - éclairage pour conduite sur autoroute) à l'aide des deux sous-ensembles suivants, représentés schématiquement sur la Figure 6 :
- un module bifonction conventionnel M1, qui fournit un faisceau d'éclairage réglementaire de croisement, tel que représenté sur la Figure 1, et un faisceau d'éclairage de route, tel que représenté sur la Figure 2, et
- un module simple M2, qui fournit un faisceau d'éclairage pour la conduite sur autoroute, tel que celui qui est représenté par la zone M sur la Figure 3.

L'ensemble projecteur selon l'invention est représenté schématiquement sur la Figure 6. On voit sur cette Figure 6 que l'ensemble projecteur comporte deux modules :
- le module M1 est un module bi-fonction code/route de type elliptique, qui comporte, de façon connue, une source lumineuse S, par exemple une lampe halogène ou une lampe xénon disposée dans un réflecteur de type elliptique E, une lentille convergente D et un cache occultant Ca mobile, apte à passer d'une première position dans laquelle son bord supérieur délimite dans le flux lumineux émis par la source S et réfléchi par le réflecteur E les segments C1, C2 et C3 du faisceau de croisement (position « code ») à une deuxième position dans laquelle le cache Ca est écarté de cette position pour permettre à tous les rayons lumineux émis par la source S de traverser la lentille D (position « route »). Le module M1 peut en outre être monté de façon mobile autour d'un axe vertical, sous l'effet d'un actionneur V, pour remplir alors la fonction AFS dite DBL pour l'expression anglo-saxonne « Dynamic Bending Light » d'éclairage de virage,
- le module M2 est par exemple du type de celui qui est décrit dans le document FR-A-2 872 257, au nom de la Demanderesse, et comprend une (ou une pluralité de) diodes électroluminescentes associée(s) à une lentille Le et à un miroir réflecteur appelé « plieuse ».

Les modules M1 et M2 sont avantageusement montés sur une platine PT, elle-même mobile en rotation autour d'un axe horizontal sous l'effet d'un actionneur L pour effectuer une correction d'assiette dynamique des faisceaux en fonction de la charge du véhicule, et d'un dispositif de réglage manuel A pour effectuer un réglage statique de l'orientation des faisceaux.

Selon ce deuxième mode de réalisation :
- le faisceau d'éclairage de croisement est obtenu simplement avec le module bi-fonction M1, dont le cache occupe sa position sensiblement verticale de manière à définir les segments C1, C2 et C3 de la Figure 1,
- le faisceau d'éclairage pour conduite sur autoroute est obtenu simplement par l'allumage du module simple M2 dédié à cette fonction, de manière à fournir la zone M de la Figure 3, le faisceau d'éclairage de croisement restant allumé, et
- le faisceau d'éclairage de route est obtenu en déplaçant le cache Ca en dehors de sa position focale, tous les rayons émis par la source S et/ou réfléchis par le miroir elliptique E traversant alors la lentille convergente D pour former le faisceau représenté sur la Figure 2.

Dans cette dernière configuration d'éclairage de route, comme on l'a vu plus haut, le faisceau de route engendré par le module bifonction possède un maximum d'intensité sur un écran à 25 mètres d'environ 100 Lux dans l'axe du véhicule en utilisant une lampe au xénon, c'est-à-dire autour du point H de la Figure 2. Ainsi qu'on l'a déjà mentionné, ce faisceau est conforme à la réglementation alors que de nombreux cahiers des charges européens demandent que ce maximum soit supérieur ou égal à 150 lux environ. Dans ce cas, il est habituel d'atteindre cette valeur à l'aide d'un projecteur additionnel dédié à cette fonction de renfort du faisceau route engendré par le module bifonction.

Conformément à la présente invention, le faisceau de route peut être rendu totalement réglementaire en lui superposant le faisceau d'éclairage pour la conduite sur autoroute, procuré par le module simple, et représenté par la zone M sur la Figure 3. Il suffit pour cela de relever légèrement, par exemple d'environ 1 %, ce faisceau d'éclairage pour la conduite sur autoroute, comme on l'a représenté sur la Figure 5.

Un tel relèvement peut être obtenu facilement à l'aide d'un moteur à électroaimant, à courant continu ou d'un moteur pas à pas. Il pourra avantageusement être obtenu par l'intermédiaire du système de correction de la portée de l'éclairage L, habituellement utilisé pour corriger cette portée d'éclairage en fonction de l'assiette du véhicule, elle même fonction de la charge transportée par le véhicule.

On voit sur la Figure 5 que le faisceau de route R, engendré par le module bi-fonction, et le faisceau d'éclairage pour conduite sur autoroute M, sont alors sensiblement superposés.

La superposition du faisceau d'éclairage pour la circulation sur route et du faisceau d'éclairage spécifique pour la circulation sur autoroute relevé d'environ 1 % a pour effet de porter le maximum d'intensité dans l'axe du véhicule d'environ 100 Lux à environ 150 Lux, ce qui rend le faisceau d'éclairage pour la circulation sur route nettement plus performant.

On a donc bien réalisé un ensemble projecteur qui est capable d'émettre sélectivement un faisceau de croisement, un faisceau de route et un faisceau spécifique pour circulation autoroutière, ne nécessitant qu'un ou deux dispositifs d'émission de lumière selon le mode de réalisation choisi. Les faisceaux ainsi fournis sont totalement réglementaires. L'ensemble projecteur de l'invention n'utilise que des modules parfaitement connus, en l'occurrence un module bifonction et éventuellement un module simple, et favorise donc une conception relativement simple ce cet ensemble, la fiabilité de son fonctionnement, tout ces avantages étant obtenus sans augmenter sensiblement le coût de l'ensemble projecteur ainsi défini.

Bien entendu, la présente invention n'est nullement limitée aux formes de réalisation décrites ci-dessus et représentées sur les dessins, mais l'homme du métier pourra y apporter de nombreuses variantes ou modifications.

En particulier, l'invention trouve application pour l'enrichissement de tout type de faisceau de croisement, qu'il soit du type décrit plus haut, du type à coupure en "V" asymétrique, du type à coupure à deux demi-plans horizontaux décalés en hauteur tel qu'il est utilisé notamment aux Etats-Unis d'Amérique, etc.

## Revendications

1. Ensemble projecteur pour véhicule automobile pour l'émission d'au moins un premier, un deuxième et un troisième faisceaux d'éclairage réglementaires différents, deux faisceaux d'éclairage différents étant émis au moins partiellement par un dispositif d'émission de lumière bifonction (M1),
**caractérisé en ce que** l'un au moins des faisceaux réglementaires remplit une fonction AFS d'éclairage pour la conduite sur autoroute,
**en ce que** le dispositif d'émission de lumière bi-fonction (M1) émet un faisceau d'éclairage réglementaire de croisement (C) et/ou un faisceau additionnel (M) apte à venir compléter ce faisceau de croisement pour créer un faisceau réglementaire pour la conduite sur autoroute,
et **en ce que** le troisième faisceau d'éclairage réglementaire est un faisceau d'éclairage de route (C et M) résultant de la superposition de faisceau d'éclairage réglementaire de croisement (C) et du faisceau additionnel pour la conduite sur l'autoroute (M), ces deux faisceaux ayant subi un relèvement vers le haut.

2. Ensemble projecteur selon la revendication 1, **caractérisé en ce qu'**il comporte en outre un module additionnel (M2) émettant un faisceau pour renforcer le faisceau de route.

3. Ensemble projecteur pour véhicule automobile pour l'émission d'au moins un premier, un deuxième, un troisième faisceaux d'éclairage réglementaires différents et un faisceaux additionnel, deux faisceaux d'éclairage différents étant émis au moins partiellement par un dispositif d'émission de lumière bifonction (M1),
**caractérisé en ce que** l'un au moins des faisceaux réglementaires remplit une fonction AFS d'éclairage pour la conduite sur autoroute,
**en ce que** le dispositif d'émission de lumière bi-fonction (M1) émet selectivement un faisceau d'éclairage réglementaire de croisement (C) ou un faisceau réglementaire d'éclairage de route (C+ R),
**en ce que** le projecteur est équipé d'un module additionnel (M2) apte à émettre un faisceau additionnel (fig. 3, M) apte à venir compléter le faisceau de croisement pour créer le faisceau réglementaire pour la conduite sur autoroute
et **en ce que** le troisième faisceau d'éclairage réglementaire est un faisceau d'éclairage réglementaire de route (C, R et M) résultant de la superposition du faisceau d'éclairage réglementaire de route (C et R) émis par le module bi-fonction (M1) et du faisceau additionnel (M) pour la conduite sur l'autoroute, ce dernier ayant subi un relèvement vers le haut.

4. Ensemble projecteur selon la revendication 1 ou la revendication 2, **caractérisé en ce que** l'un au moins des faisceaux d'éclairage différents remplit la fonction AFS d'éclairage de virage.

5. Ensemble projecteur selon l'une des revendications 1 ou 3, **caractérisé en ce que** le dispositif d'émission de lumière bifonction est monté de façon mobile autour d'un axe vertical, sous l'effet d'un actionneur V, pour remplir la fonction AFS d'éclairage de virage.

6. Ensemble projecteur selon l'une quelconque des revendications 1 ou 3, **caractérisé en ce que** le dispositif d'émission de lumière bifonction est mobile en rotation autour d'un axe horizontal pour effectuer une correction d'assiette des faisceaux lumineux émis.

## Claims

1. Headlight assembly for a motor vehicle, for emission of at least one first, one second and one third different statutory lighting beam, two different lighting beams being emitted at least partially by a bi-function light emission device (M1),
**characterised in that** at least one of the statutory beams fulfils an AFS lighting function for driving on a motorway,
**in that** the bi-function light emission device (M1) emits a statutory low lighting beam (C) and/or an additional beam (M) which can complete this low beam in order to create a statutory beam for driving on a motorway,
and **in that** the third statutory lighting beam is a road lighting beam (C and M) obtained from the superimposition of the statutory low lighting beam (C) and the additional beam for driving on the motorway (M), these two beams having been raised upwards.

2. Headlight assembly according to claim 1, **characterised in that** it also comprises an additional module (M2) which emits a beam in order to reinforce the road beam.

3. Headlight assembly for a motor vehicle, for emission of at least one first, one second and one third different statutory lighting beam and an additional beam, two different lighting beams being emitted at least partially by a bi-function light emission device (M1),
**characterised in that** at least one of the statutory beams fulfils an AFS lighting function for driving on a motorway,
**in that** the bi-function light emission device (M1) emits selectively a statutory low lighting beam (C) or a statutory road lighting beam (C + R),
**in that** the headlight is equipped with an additional module (M2) which can emit an additional beam (fig. 3, M) which can complete the low beam in order to create the statutory beam for driving on a motorway,
and **in that** the third statutory lighting beam is a statutory road lighting beam (C, R and M), obtained from the superimposition of the statutory road lighting beam (C and R) emitted by the bi-function module (M1) and the additional beam (M) for driving on the motorway, the latter having been raised upwards.

4. Headlight assembly according to claim 1 or claim 2, **characterised in that** at least one of the different lighting beams fulfils the bend lighting AFS function.

5. Headlight assembly according to one of claims 1 or 3, **characterised in that** the bi-function light emission device is fitted such as to be mobile around a vertical axis, under the effect of an actuator V, in order to fulfil the bend lighting AFS function.

6. Headlight assembly according to any one of claims 1 or 3, **characterised in that** the bi-function light emission device is mobile in rotation around a horizontal axis, in order to carry out correction of the position of the light beams emitted.

## Patentansprüche

1. Scheinwerfereinheit für Kraftfahrzeuge zur Emission wenigstens eines ersten, eines zweiten und eines dritten unterschiedlichen vorschriftsgemäßen Lichtbündels, wobei zwei unterschiedliche Lichtbündel wenigstens teilweise von einer Bifunktionslichtemissionsvorrichtung (M1) abgegeben werden,
**dadurch gekennzeichnet, dass** wenigstens eines der vorschriftsgemäßen Lichtbündel eine AFS-Lichtfunktion für Autobahnfahrten erfüllt,
dass die Bifunktionslichtemissionsvorrichtung (M1) ein vorschriftsgemäßes Abblendlichtbündel (C) und/oder ein Zusatzlichtbündel (M) abgibt, welches das Abblendlicht zu ergänzen vermag, um ein vorschriftsgemäßes Lichtbündel für Autobahnfahrten zu erzeugen,
und dass das dritte vorschriftsgemäße Lichtbündel ein Fernlichtbündel (C und M) ist, das aus der Überlagerung des vorschriftsgemäßen Abblendlichtbündels (C) und des Zusatzlichtbündels (M) für Autobahnfahrten resultiert, wobei diese beiden Lichtbündel nach oben angehoben sind.

2. Scheinwerfereinheit nach Anspruch 1,
**dadurch gekennzeichnet, dass** sie ferner ein Zusatzmodul (M2) umfasst, das ein Lichtbündel zur Verstärkung des Fernlichtbündels abgibt.

3. Scheinwerfereinheit für Kraftfahrzeuge zur Emission wenigstens eines ersten, eines zweiten, eines dritten unterschiedlichen vorschriftsgemäßen Lichtbündels und eines Zusatzlichtbündels, wobei zwei unterschiedliche Lichtbündel wenigstens teilweise von einer Bifunktionslichtemissionsvorrichtung (M1) abgegeben werden,
**dadurch gekennzeichnet, dass** wenigstens eines der vorschriftsgemäßen Lichtbündel eine AFS-Lichtfunktion für Autobahnfahrten erfüllt,
dass die Bifunktionslichtemissionsvorrichtung (M1) selektiv ein vorschriftsgemäßes Abblendlichtbündel (C) oder ein vorschriftsgemäßes Fernlichtbündel (C+R) abgibt, dass der Scheinwerfer mit einem Zusatzmodul (M2) ausgestattet ist, das ein Zusatzlichtbündel (Fig. 3, M) abzugeben vermag, welches das Abblendlichtbündel zu ergänzen vermag, um das vorschriftsgemäße Lichtbündel für Autobahnfahrten zu erzeugen,
und dass das dritte vorschriftsgemäße Lichtbündel ein vorschriftsgemäßes Fernlichtbündel (C, R und M) ist, das aus der Überlagerung des von dem Bifunktionsmodul (M1) abgegebenen vorschriftsgemäßen Fernlichtbündels (C und R) und des Zusatzlichtbündels (M) für Autobahnfahrten resultiert, wobei Letzteres nach oben angehoben ist.

4. Scheinwerfereinheit nach Anspruch 1 oder Anspruch 2,
**dadurch gekennzeichnet, dass** wenigstens eines der unterschiedlichen Lichtbündel die AFS-Kurvenlichtfunktion erfüllt.

5. Scheinwerfereinheit nach einem der Ansprüche 1 oder 3,
**dadurch gekennzeichnet, dass** die Bifunktionslichtemissionsvorrichtung unter der Wirkung eines Stellorgans (V) beweglich um eine vertikale Achse herum montiert ist, um die AFS-Kurvenlichtfunktion auszuführen.

6. Scheinwerfereinheit nach einem der Ansprüche 1 oder 3,
**dadurch gekennzeichnet, dass** die Bifunktionslichtemissionsvorrichtung um eine horizontale Achse herum drehbar ist, um eine Höhenregulierung der emittierten Lichtbündel vorzunehmen.
